# EUROPÄISCHE PATENTSCHRIFT

(11) **EP 0 898 149 B1**
(45) Veröffentlichungstag und Bekanntmachung des Hinweises auf die Patenterteilung: **13.10.2004**
(21) Anmeldenummer: 98113735.9
(22) Anmeldetag: 23.07.1998
(51) Int. Cl.: G01C 22/02, G01C 21/20, G01P 3/00, G01P 21/02, G01P 3/66

(54) **Verfahren zur Bestimmung der zurückgelegten Wegstrecke und/oder der Geschwindigkeit eines Fahrzeugs**
Method for determining the distance travelled by and/or the speed of a vehicle
Méthode pour déterminer la distance parcourue et/ou la vitesse d'une voiture

(30) Priorität: 16.08.1997 DE 19735659
(43) Veröffentlichungstag der Anmeldung: 24.02.1999
(73) Patentinhaber: ROBERT BOSCH GMBH, 70442 Stuttgart (DE)
(72) Erfinder: Wannke, Dietmar, 72768 Reutlingen (DE)

(56) Entgegenhaltungen:
- DE-A- 19 528 183
- GB-A- 2 079 453
- GB-A- 2 247 128
- US-A- 4 878 170

## Beschreibung

### Stand der Technik

Die Erfindung geht aus von einem Verfahren zur Bestimmung der zurückgelegten Wegstrecke und/oder der Geschwindigkeit eines Fahrzeugs nach dem Oberbegriff des Patentanspruchs 1.

Zur Ermittlung der Fahrzeuggeschwindigkeit muß die pro Zeiteinheit zurückgelegte Wegstrecke des Fahrzeugs erfaßt werden. Dazu werden in der Praxis in der Regel Rad- oder Getriebesensoren verwendet, die die Radumdrehungen als Impulsfolge erfassen und so die Anzahl der Radumdrehungen pro Zeiteinheit ermitteln können. Ist der Reifendurchmesser bzw. der Reifenumfang bekannt, so läßt sich aus der Anzahl der Radumdrehungen einfach die zurückgelegte Wegstrecke ermitteln.

In der Praxis treten allerdings bei dieser Art der Wegstreckenerfassung Fehler in der Größenordnung von 3 bis 5 % auf, die auf Abweichungen im Reifendurchmesser zurückzuführen sind. So hängt der tatsächliche Reifendurchmesser von verschiedenen Faktoren, wie z.B. vom Beladungszustand des Fahrzeugs, vom Reifenverschleiß und von Reifendruckänderungen, ab. Auch beim Wechsel von Sommer- auf Winterreifen kann es zu einer Veränderung des tatsächlich vorliegenden Reifendurchmessers bzw. Reifenumfangs kommen.

In US-A-4 878 170 wird ein Fahrzeugnavigationssystem beschrieben, bei dem eine zurückgelegte Entfernung und eine Fahrzeuggeschwindigkeit aus gezählten Radumdrehungen und einem bekannten Radumfang bestimmt werden. Zur Kalibrierung des Radumfangs werden Radumdrehungen über eine bekannte Meßdistanz gezählt und die Meßdistanz durch die Radumdrehungen dividiert. Als Meßdistanz dienen bekannte gespeicherte Entfernungen zwischen zwei Entscheidungspunkten, also Kreuzungen, die auf der Fahrtroute liegen und an denen Fahrhinweise zur Leitung des Fahrers ausgegeben werden. Das Befahren einer Kreuzung wird dabei dadurch festgestellt, dass sich die Radumdrehungen an der gelenkten Fahrzeugachse deutlich voneinander unterscheiden oder ein Lenkwinkelgeber einen starken Lenkradeinschlag erfaßt.

Für eine gezielte Fahrzeugregelung sollte die tatsächliche Geschwindigkeit des Fahrzeugs möglichst genau zu bestimmbar sein. Hier sind Fehlerabweichungen in der obengenannten Größenordnung in der Regel nicht tolerierbar.

### Vorteile der Erfindung

Zur Vermeidung von Ungenauigkeiten bei der Bestimmung der tatsächlich zurückgelegten Wegstrecke und/oder der Geschwindigkeit eines Fahrzeugs wird erfindungsgemäß eine Kalibrierung der die zurückgelegte Wegstrecke erfaßenden Sensoranordnung vorgeschlagen. Dazu wird bei einer zurückgelegten Messwegstrecke, deren Länge bekannt ist, die Anzahl der Radumdrehungen bestimmt und daraus ein Referenzwert für den tatsächlichen Radumfang gebildet. Parallel dazu wird auch die Anzahl der Radumdrehungen innerhalb eines definierten Zeitintervalls erfaßt. Zusammen mit dem Referenzwert kann dann die Geschwindigkeitsbestimmung über die Anzahl der Radumdrehungen erfolgen. Die zur Bestimmung des Referenzwertes zurückgelegte Messwegstrecke wird mittels eines satellitengestützten Ortungs- oder Navigationssystems erfaßt. Mit derartigen Ortungssystemen kann nämlich eine sehr genaue Koppelortung durchgeführt werden. Bspw. kann im freigegebenen zivilen Bereich vom DGPS (Differential Global Positioning System) bei der Koppelortung eine Positionsgenauigkeit von ca. 50 cm erreicht werden.

Das erfindungsgemäße Verfahren ermöglicht also eine sehr genaue Bestimmung des aktuellen Radumfangs und somit der tatsächlichen Geschwindigkeit eines Fahrzeugs unter Verwendung der üblicherweise in Fahrzeugen eingesetzten kostengünstigen und robusten Sensorik.

In einer besonders vorteilhaften Variante des erfindungsgemäßen Verfahrens wird der Referenzwert, also die zurückgelegte Messwegstrecke, mit Hilfe eines Ortungs- oder Navigationssystems erfaßt. Dazu eignen sich bspw. die aus der Praxis bekannten kartengestützten Ortungssysteme, die auf dem sog. LANDFALL-Verfahren (Links And Nods Database For Automatic Landvehicle Location) beruhen. Mit Hilfe einer digital abgespeicherten Karte wird hier die zwischen zwei Kreuzungen zurückgelegte Wegstrecke, deren Länge dadurch exakt bekannt ist, mit der Anzahl der Radumdrehungen verglichen und daraus ein aktueller Wert "Wegstrecke/Anzahl der Radumdrehungen" berechnet. Dieser Wert wird regelmäßig überprüft bzw. aktualisiert, so daß die tatsächlich vom Fahrzeug zurückgelegte Wegstrecke über die erfaßte Anzahl der Radumdrehungen auch unabhängig vom Reifen- oder Ladezustand stets mit sehr hoher Genauigkeit ermittelbar ist.

Da zu erwarten ist, daß der Anteil an mit Ortungssystemen ausgestatteten Fahrzeugen immer mehr steigt, insbesondere wenn diese Ortungssysteme mit fortschreitender Entwicklung auch preiswerter werden, bietet sich deren Einsatz im Rahmen des erfindungsgemäßen Verfahrens an.

Der Referenzwert kann aber auch beim Vorbeifahren an in geeigneter Weise an der Fahrzeugroute positionierten identifizierbaren Stationen bestimmt werden. Mit Hilfe dieser Stationen läßt sich nämlich die genaue Fahrzeugposition und daraus abgeleitet die vom Fahrzeug zwischen den beiden Stationen zurückgelegte Wegstrecke ermitteln. Bei den Stationen kann es sich entweder um passive Stationen handeln, wie z.B. Mautbaken oder auch um aktive Stationen, d.h. Stationen, die ein vom Fahrzeug empfangbares Sendesignal ausstrahlen. In diesem Falle wäre dann weder ein karten- noch ein satellitengestütztes Ortungssystem zur Referenzwertbestimmung erforderlich.

In einer besonders vorteilhaften Variante des erfindungsgemäßen Verfahrens wird der Referenzwert regelmäßig neu bestimmt. Dies ist empfehlenswert, da der tatsächliche Reifenumfang, wie bereits erwähnt, von vielen verschiedenen Faktoren, wie z.B. dem Ladezustand des Fahrzeugs, dem Reifendruck, der Reifenabnutzung, etc. abhängt.

Vorteilhaft ist weiter, daß die tatsächliche Geschwindigkeit angezeigt wird, so daß eine mögliche Tachofehlanzeige erkennbar ist. Eine Verknüpfung mit einem Fahrtschreiber usw. kann im Falle eines Unfalls oder bei Geschwindigkeitsübertretungen hilfreich sein.

### Zeichnungen

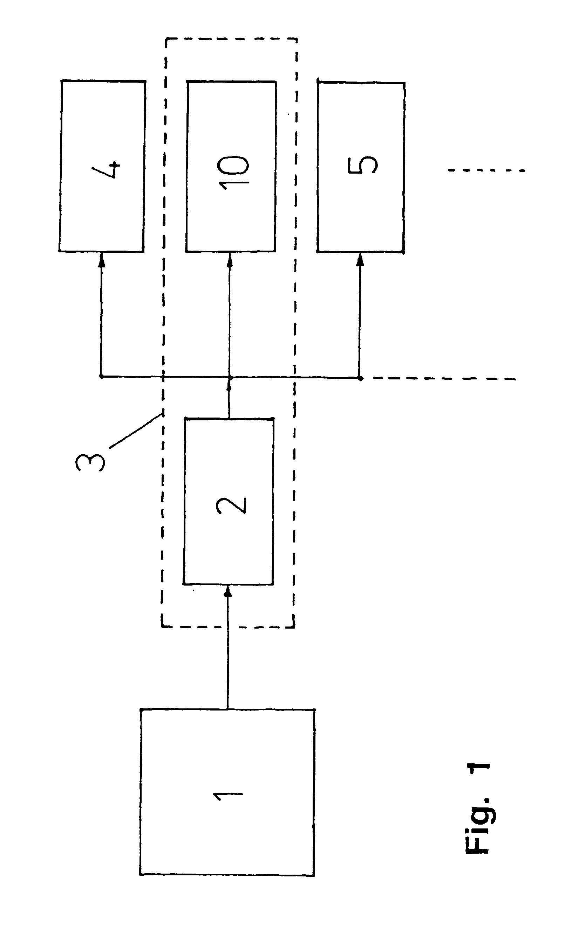

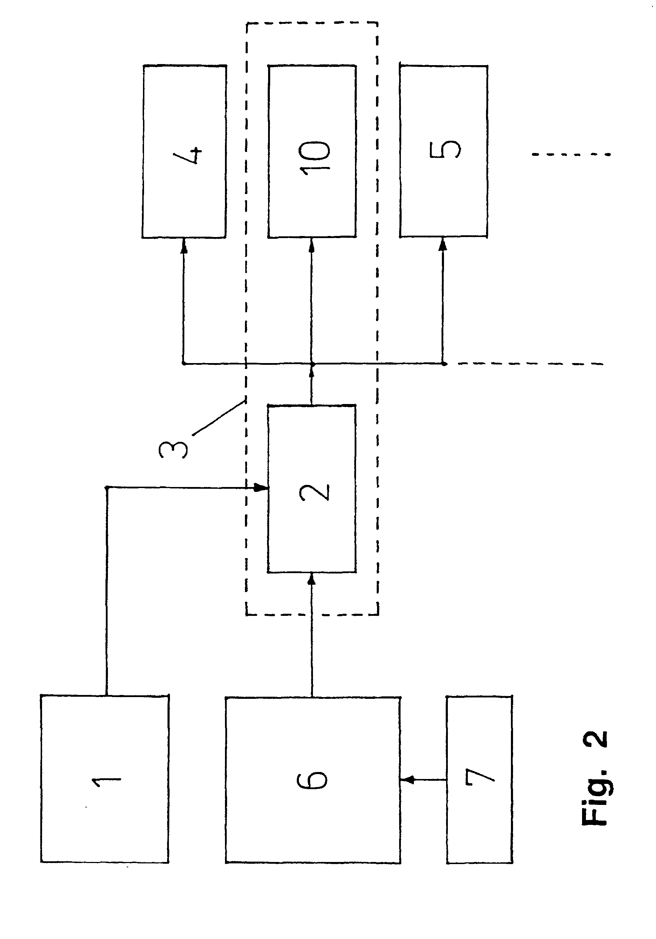

Es gibt nun verschiedene Möglickeiten, das erfindungsgemäße Verfahren zur Bestimmung der Geschwindigkeit eines Fahrzeugs zu realisieren. Zur Erläuterung ist in Fig. 1 zunächst eine bekannte Anordnung zur Bestimmung des vom Fahrzeug zurückgelegten Fahrweges und der Geschwindigkeit dargestellt. Fig. 2 zeigt ebenfalls die in Fig. 1 dargestellte bekannte Anordnung, die allerdings zur Durchführung des erfindungsgemäßen Verfahrens erweitert worden ist. Deshalb bezeichnen gleiche Bezugszeichen in den Fig. 1 und 2 auch gleichen Komponenten der dargestellten Anordnungen.

### Beschreibung der Ausführungsbeispiele

Bei einer bekannten Wegmessung gemäß der Figur 1 ist mit 1 ein Wegsensor bezeichnet, bei dem es sich um einen einfachen Radsensor, einen entsprechenden Abgriff am Getriebe oder der Antriebswelle handeln kann. Mit dem hier dargestellten Wegsensor 1 läßt sich aber nicht die tatsächlich vom Fahrzeug zurückgelegte Wegstrecke s erfassen, sondern lediglich die Anzahl der Radumdrehungen bestimmen, die in Form von Impulsfolgen erfaßt werden. Der Wegsensor 1 kann also lediglich Impulse zählen. Zur Ermittlung der jeweils zurückgelegten Wegstrecke s wird die entsprechende Anzahl der Radumdrehungen mit einem fest vorgegebenen Wert, einem Referenzwert, für den Radumfang multipliziert. Der Wegsensor 1 ist mit einer Kalibriervorrichtung 2 eines Tachometers 3 verbunden. Der Tachometer 3 weist eine Anzeige 10 für die so ermittelte zurückgelegte Wegstrecke s und die Fahrgeschwindigkeit v auf. An dem Tachometer 3 sind Anschlüsse für weitere Geräte vorgesehen, wie z.B. für einen Fahrgeschwindigkeitsregler 4, einen Fahrtenschreiber 5, einen Bordcomputer oder ein Taxameter, die die Informationen über die aktuell zurückgelegte Wegstrecke s und die Geschwindigkeit v in irgendeiner Form weiterverarbeiten.

Da, wie bereits erwähnt, der Wegsensor 1 nicht die tatsächlich vom Fahrzeug zurückgelegte Wegstrecke s und die daraus resultierende tatsächliche Geschwindigkeit v des Fahrzeugs messen kann, es aber wünschenswert ist, diese Größen möglichst exakt zu bestimmen, wird erfindungsgemäß vorgeschlagen, die in Fig. 1 dargestellte Anordnung zu kalibrieren. Dazu wird für eine zurückgelegte Wegstrecke, deren Länge bekannt ist, die Anzahl der Radumddrehungen gezählt und daraus ein Referenzwert für den aktuellen Radumfang bestimmt. Anhand dieses Referenzwerts und der erfaßten Anzahl der Radumdrehungen wird dann ein beliebiger zurückgelegter Fahrweg bzw. innerhalb eines definierten Zeitintervalls die tatsächliche Geschwindigkeit des Fahrzeugs bestimmt.

Ein erfindungsgemäßes Ausführungsbeispiel ist in Figur 2 dargestellt und nachfolgend näher erläutert. Gemäß der in Fig. 2 dargestellten erweiterten Anordnung erfolgt die Kalibrierung mit Hilfe eines Ortungssystems 6 mit einer digitalen Karte 7 (CD-ROM). Mit Hilfe des Ortungssystems 6 und der digitalen Karte 7 ist die Länge einer Wegstrecke beispielsweise zwischen zwei Kreuzungspunkten, deren Koordinaten auf einer CD-ROM gespeichert sind, genau bekannt, so daß für die vom Fahrzeug zurückgelegte Wegstrecke vom Wegsensor 1 die Radumdrehungen exakt bestimmt und an die Kalibriervorrichtung 2 übermittelt werden können. Die Bestimmung des Referenzwertes erfolgt ohne Eingriff des Fahrers automatisch, z.B. wenn das Navigationssystem beim Abbiegen an zwei nachfolgenden Kreuzungen aufgrund der gespeicherten Kartendaten die genaue Weglänge zwischen diesen beiden Kreuzungen bestimmen kann. Aus der erfaßten Anzahl der Radumdrehungen und der Länge der bekannten Wegstrecke wird ein sogenannter Korrekturfaktor oder Referenzwert pro Radumdrehung ermittelt. Mit diesem Korrekturfaktor kann die Kalibriervorrichtung 2 aus den vom Wegsensor 1 gezählten Radumdrehungen die tatsächlich zurückgelegte Wegstrecke s und die entsprechende Geschwindigkeit v berechnen. Diese Daten können dann separat angezeigt werden und/oder an die angeschlossenen Geräte 4, 5, etc. übermittelt werden, damit diese Geräte exakt messen.

Alternativ dazu könnte der Wegsensor 1 aber auch mit dem Ortungssystem 6 verbunden sein und diesem die erfaßte Anzahl der Radumdrehungen übermitteln. In diesem Falle könnten dann sowohl der Korrekturfaktor als auch die tatsächlich zurückgelegte Wegstrecke s bereits vom Ortungssystem 6 berechnet werden und an die Kalibriervorrichtung 2 übermittelt werden. Dadurch kann die Verbindung zwischen dem Wegsensor 1 und der Kalibriervorrichtung 2 eingespart werden. Außerdem vereinfacht sich in diesem Falle das Steuerprogramm der Kalibriervorrichtung 2.

Zusammenfassend sei nochmals darauf hingewiesen, daß das erfindungsgemäße Verfahren eine sehr genaue Bestimmung der von einem Fahrzeug zurückgelegten Wegstrecke und dadurch auch der Fahrzeuggeschwindigkeit unabhängig vom Reifen- oder Ladezustand des Fahrzeugs ermöglicht. Vorteilhaft ist, daß sich das erfindungsgemäße Verfahren auch unter Verwendung von sehr einfachen und damit preiswerten Wegsensoren, wie z.B. einem Abgriff am Getriebe oder der Antriebswelle, realisieren läßt, da eine Kalibrierung der die zurückgelegte Wegstrecke erfassenden Sensorik vorgesehen ist. Bei Fahrzeugen, die mit einem kartengestützten Ortungssystem ausgestattet sind, ist für die Realisierung des erfindungsgemäßen Verfahrens keine zusätzliche Hardware erforderlich, da ein Ortungssystem vorteilhaft für die Kalibrierung eingesetzt werden kann. Schließlich sei noch erwähnt, daß sich die mit dem erfindungsgemäßen Verfahren durchführbare exakte Bestimmung der Fahrzeuggeschwindigkeit auch vorteilhaft auf Fahrzeugeinrichtungen, wie den Fahrgeschwindigkeitsregler, den Fahrtenschreiber, den Bordcomputer, ein Taxameter, etc., und nicht zuletzt auch auf die Einhaltung gesetzlicher Vorschriften, wie Geschwindigkeitsbeschränkungen, auswirkt.

## Patentansprüche

1. Verfahren zur Bestimmung der zurückgelegten Wegstrecke und/oder der Geschwindigkeit eines Fahrzeugs, bei dem die zurückgelegte Wegstrecke über die Anzahl der Radumdrehungen und einen Referenzwert und/oder die Geschwindigkeit des Fahrzeugs aus der in einem vorgegebenen Zeitintervall erfassten Anzahl der Radumdrehungen und dem Referenzwert bestimmt wird,
wobei der Referenzwert für eine Radumdrehung aus einer definierten zurückgelegten Mess-Wegstrecke bestimmt wird,
**dadurch gekennzeichnet,**
**dass** die zur Bestimmung des Referenzwertes zurückgelegte Mess-Wegstrecke mittels eines satellitengestützten Ortungs- oder Navigationssystems erfasst wird.

2. Verfahren nach Anspruch 1, **dadurch gekennzeichnet, dass** die zurückgelegte Mess-Wegstrecke mit Hilfe eines darüber hinaus kartengestützten Ortungs- oder Navigationssystems bestimmt wird.

3. Verfahren nach einem der vorhergehenden Ansprüche, **dadurch gekennzeichnet, dass** der Referenzwert regelmäßig neu bestimmt wird.

4. Verfahren nach einem der vorhergehenden Ansprüche, **dadurch gekennzeichnet, dass** die ermittelte aktuelle Geschwindigkeit zur Kalibrierung eines Tachometers mit einem Geschwindigkeitsmessers und/oder Wegstreckenzähter oder daran angeschlossener Geräte, wie Fahrgeschwindigkeitsregler, Fahrtenschreiber, Taxameter oder Bordcomputer, die die Informationen über eine aktuell zurückgelegte Wegstrecke oder Geschwindigkeit weiterverarbeiten, verwendet wird.

## Claims

1. Method for determining the distance travelled by and/or speed of a vehicle, in which the distance travelled is determined by means of the number of wheel revolutions and a reference value and/or the speed of the vehicle from the number of wheel revolutions sensed in a predefined time interval and the reference value, the reference value for a wheel revolution being determined from a defined measured distance travelled, **characterized in that** the measured distance travelled for determining the reference value is sensed by means of a satellite-supported locating or navigation system.

2. Method according to Claim 1, **characterized in that** the measured distance travelled is determined using a locating or navigation system which is also map-supported.

3. Method according to one of the preceding claims, **characterized in that** the reference value is newly determined on a regular basis.

4. Method according to one of the preceding claims, **characterized in that** the determined, current speed is used to standardize a speedometer with a speed measuring device and/or odometer or devices connected thereto such as travelling speed regulators, tachograph, taximeter or on-board computer which further process the information relating to a distance travelled or speed at a particular time.

## Revendications

1. Procédé pour déterminer le trajet parcouru et/ou la vitesse d'un véhicule, selon lequel le trajet parcouru est déterminé par le nombre de tours de roue et par une valeur de référence et/ou la vitesse du véhicule à partir du nombre de tours de roue détecté dans un laps de temps prédéterminé et à partir de la valeur de référence, est déterminée la valeur de référence pour un tour de roue à partir d'un certain trajet de mesure parcouru,
**caractérisé en ce que**
le trajet de mesure parcouru qui sert à déterminer la valeur de référence est détecté à l'aide d'un système de localisation et de navigation assisté par satellite.

2. Procédé selon la revendication 1,
**caractérisé en ce que**
le trajet de mesure parcouru est déterminé à l'aide d'un système de localisation et de navigation en outre assisté par carte.

3. Procédé selon l'une des revendications précédentes,
**caractérisé en ce que**
la valeur de référence est régulièrement déterminée à nouveau.

4. Procédé selon l'une des revendications précédentes,
**caractérisé en ce que**
la vitesse actuelle établie est utilisée pour étalonner un tachymètre comportant un indicateur de vitesse et/ou un compteur de trajet ou des appareils qui y sont raccordés comme un régulateur de vitesse de conduite, un tachygraphe, un taximètre ou un ordinateur de bord qui retraitent les informations concernant un trajet actuellement parcouru ou une vitesse.
